# EUROPEAN PATENT APPLICATION

(11) **EP 1 804 499 A1**
(43) Date of publication of application: **04.07.2007**
(21) Application number: 06256616.1
(22) Date of filing: 29.12.2006
(51) Int. Cl.: H04N 5/74, G02B 7/182, G03B 21/62

(54) **Rear projection display apparatus**

(30) Priority: 29.12.2005 JP 2005380626
(71) Applicant: SONY CORPORATION, Tokyo 141 (JP)
(72) Inventor: Hiramatsu, Yoichi c/o Sony Corporation, Tokyo 141 (JP); Kidokoro, Yoshikazu c/o Sony Corporation, Tokyo 141 (JP); Utsumi, Kenichiro c/o Sony Corporation, Tokyo 141 (JP); Koizumi, Makoto c/o Sony Corporation, Tokyo 141 (JP)
(74) Representative: Jackson, Jonathan Andrew

(57) **Abstract**

A rear projection display apparatus includes: a screen, a projection mirror; a video apparatus for projecting a picture, an optical unit including a projection lens, a light source, a drive and control circuit, and a structure body for holding the screen, wherein the projection mirror is adjustably provided on the structure body fitted with the screen or on a structure body holding the screen.

## Description

This invention relates to rear projection display apparatus.

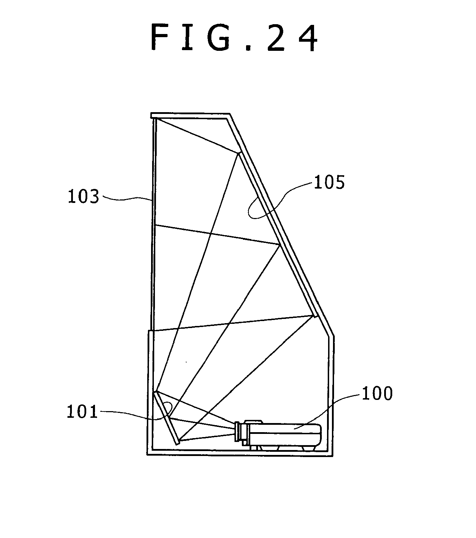

FIG. 24 of the accompanying drawings shows an example of the internal configuration of a rear projection display apparatus in the related art. This rear projection display apparatus is so configured that an image from a projected image forming part in a projector main body 100 disposed at a rear lower position inside a casing is projected by a projection lens while being projected back or forth by a first plane mirror 101 provided at a front lower position inside the casing and a second plane mirror 105 provided on the rear side in the casing, and is focused from the rear side onto a transmitting screen 103 provided at the front side of the casing, to display an image.

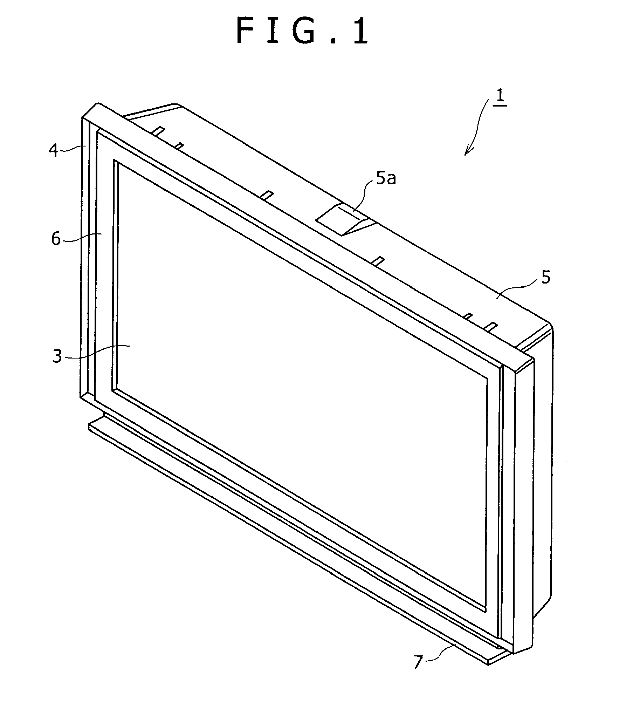

In such a kind of rear projection display apparatus, the area of the screen can be enlarged while suppressing the front-rear dimension to be small, and, therefore, the overall size of the display can be enlarged more easily than the CRT-type television sets. In view of this, the rear projection display apparatuses have come to be used frequently as a video apparatus in a "home theater" use. Incidentally, Japanese Patent Laid-open No. Hei 11-84533 (FIG. 1) (hereinafter referred to as Patent Document 1) discloses a rear projection display apparatus in which, unlike the configuration of FIG. 24, the first plane mirror is not provided, and an image is projected through a projection lens onto the second plane mirror.

In such a rear projection display apparatus, the image from the projector main body 100 is reflected by the first plane mirror 101 and the second plane mirror 105, to be focused on the transmitting screen 103. Therefore, it is important that the plane mirrors are located at predetermined positions at all times. In connection with this, the rear projection display apparatus disclosed in Japanese Patent Laid-open No. Hei 11-142972 (page 2, FIGS. 1 and 2)(hereinafter referred to as Patent Document 2) has hitherto been known.

In Patent document 2, description is made of a structure relating to a mirror mounting mechanism of an apparatus for projecting an image onto a screen by a reflecting mirror, such as a rear projector.

The mirror mounting mechanism has, used in a rear protector in which a reflecting mirror is provided on the back side of an apparatus and an image is projected on a screen through the reflecting mirror, supports and fixes the reflecting mirror at the four sides of the reflecting mirror, whereby warping of the reflecting mirror due to its own weight is restrained as much as possible, so as to maintain the flatness of the reflecting mirror.

Besides, with the warping of the reflecting mirror thus restrained, distortion of the image on the screen is precluded.

In the rear projection display apparatus shown in FIG. 24, the large second plane mirror is fixed on the rear side inside the casing, and no adjusting mechanism therefor is provided. Therefore, where a defective product is generated due to dispersion of mounting, it is impossible to easily correct the defect and to enhance the positional accuracy as to the mirror position, in this related art. As a countermeasure against this problem, it has been the common practice to support and fix the reflecting mirror on the rear side in the casing through the four sides of the reflecting mirror, to restrain the warping of the reflecting mirror, as described in Patent document 2.

On the other hand, in a rear projection display apparatus, for a more reduction in the installation area, a further reduction in the front-rear dimension (depth size) of the display has been investigated, for example, by adopting a structure in which the plane mirror 105 in FIG. 24 provided in related art on the rear side is disposed on the ceiling plate side and the image is nearly vertically projected from the projector.

In such a configuration in which the plane mirror is disposed on the side of the ceiling plate of the rear projection display apparatus, the condition for the relative positional relationship between the plane mirror and the screen becomes severer than in the related art. Therefore, it is essential that the position of the plane mirror can be adjusted.

Thus, there is a need to provide a rear projection display apparatus in which a plane mirror for projection is disposed on the ceiling plate side and which includes a mirror adjusting mechanism having sufficient rigidity and positioning accuracy.
Various respective aspects and features of the invention are defined in the appended claims. Features from the dependent claims may be combined with features of the independent claims as appropriate and not merely as explicitly set out in the claims.

Embodiments of the present invention relate to a rear projection display apparatus such that a video apparatus, an optical unit including a projection lens, a light source, a mirror and the like are provided therein and a screen is attached to the front side thereof.

According to an embodiment of the present invention, there is provided a rear projection display apparatus including, a screen, a projection mirror, a video apparatus for projecting a picture, an optical unit including a projection lens, a light source, a drive and control circuit, and a structure body for holding the screen, wherein the projection mirror is adjustably provided on the structure body fitted with the screen or on a structure body holding the screen.

According to the rear projection display apparatus in an embodiment of the present invention configured as just-mentioned, the projection mirror is adjustably provided on the structure body so configured as to have an increased rigidity. This makes it possible to more easily carry out the final adjustment at the stage upon assembly of the structure body (outer box) or in the site of installation of the display by the user, as compared with the configuration in the past in which the warping of the reflection mirror due to its own weight is restrained as much as possible, and to maintain flatness of the mirror, by supporting and fixing the mirror through the four sides of the mirror.

According to the rear projection display apparatus in embodiments of the present invention, the installation area can be reduced, and the projection mirror can be held without loosing the flatness thereof.

The invention will now be described by way of example with reference to the accompanying drawings, throughout which like parts are referred to by like references, and in which:
FIG. 1 is a perspective view, from the front side, of a rear projection display apparatus according to one embodiment of the present invention;
FIG. 2 is a perspective view, from the rear side, of the rear projection display apparatus shown in FIG. 1;
FIG. 3 is an exploded perspective view, from the front side, of the rear projection display apparatus shown in FIG. 1;
FIG. 4 is a perspective view, from the front side, of the display unit shown in FIG. 3;
FIG. 5 is a perspective view, from the rear side, of the display unit shown in FIG. 3;
FIG. 6 is a perspective view, from the rear side, of only the frame structure body in the display unit shown in FIG. 5;
FIGS. 7A and 7B are perspective views of the projection mirror shown in FIG. 5, in which FIG. 7A is a perspective view from the upper side of the projection mirror, and FIG. 7B is a perspective view from the upper side of the projection mirror in the inverted state;
FIG. 8 is a sectional view at the center of the projection window shown in FIG. 5, around the optical unit;
FIG. 9 illustrates an example of optical path of a picture projected in the rear projection display apparatus according to the one embodiment of the present invention;
FIG. 10 is a partly broken perspective view of four frames constituting a screen frame in the frame structure body shown in FIG. 6;
FIGS. 11A to 11D are sectional views of the four frames shown in FIG. 10, in which FIG. 11A shows the top frame, FIG. 11B shows the right side frame, FIG. 11C shows the left side frame, and FIG. 11D shows the bottom frame;
FIG. 12 is a perspective view showing the condition where the bottom frame and the left side frame, in the frame structure body shown in FIG. 6, are positioned and fixed;
FIG. 13 is a perspective view showing the condition where the top frame and the left side frame, in the frame structure body shown in FIG. 6, are positioned and fixed;
FIG. 14 is a perspective view showing the condition where the left frame support for connecting the bottom frame and the left side frame, in the frame structure body shown in FIG. 6, in a bracing manner is fixed to the left side frame;
FIG. 15 is a sectional view for illustrating a mounted state of the screen shown in FIG. 4;
FIG. 16 is an exploded perspective view of the mirror fixing plate shown in FIG. 6;
FIG. 17 is a perspective view of a mirror holding plate shown in FIG. 7A;
FIG. 18 is a sectional view for illustrating the condition, immediately before mounting onto the top frame, of the projection mirror in the display unit according to one embodiment of the present invention;
FIG. 19 is a sectional view showing the mounted condition of the projection mirror in the display unit according to one embodiment of the present invention;
FIG. 20 is a sectional view taken at the center of the projection mirror shown in FIG. 7A;
FIGS. 21A to 21D are perspective views of members used for the projection mirror shown in FIGS. 7A and 7B, in which FIG. 21A is a view from above of a support piece, FIG. 21B is a view from above of the support piece in the inverted state, FIG. 21C is a view of a presser piece, and FIG. 21D is a view of a shaft piece;
FIG. 22 is an enlarged perspective view of an essential part, showing the condition immediately after the mounting of the projection mirror shown in FIG. 18 to the top frame;
FIG. 23 is a partly sectional perspective view, showing an essential part in section, of the projection mirror shown in FIG. 19 in its mounted state; and
FIG. 24 illustrates the optical path in projection of a picture onto a screen in a rear projection display apparatus according to the related art.

Now, an embodiment of the present invention will be described below referring to FIGS. 1 to 23.

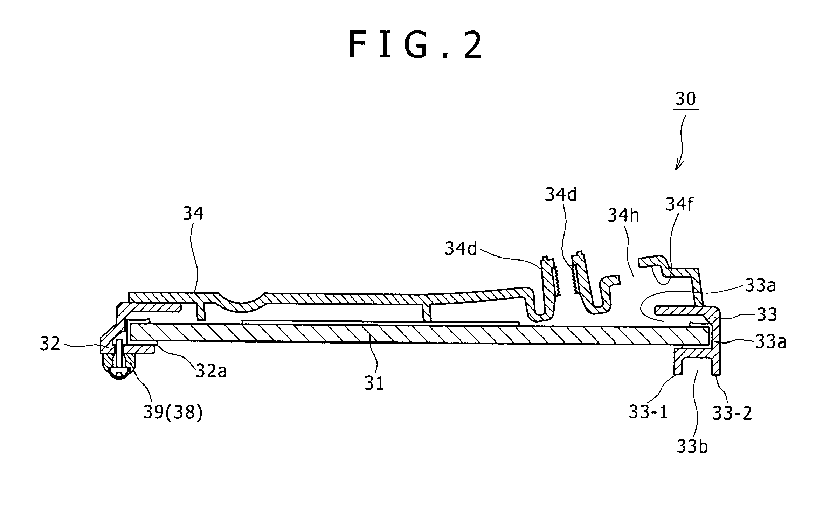

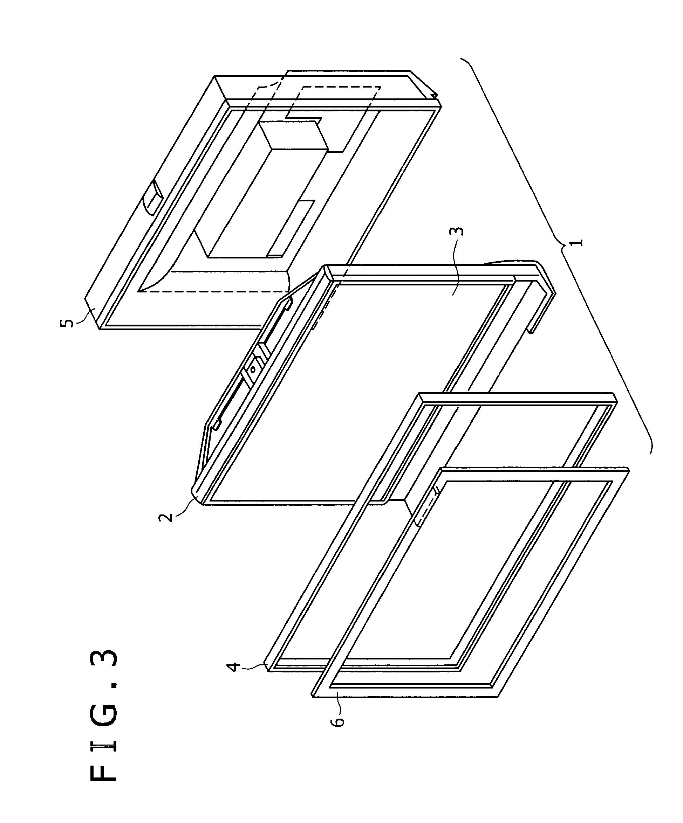

FIG. 1 is a perspective view, from the front side, of a rear projection display apparatus according to the present embodiment, and FIG. 2 is a perspective view, from the rear side, of the rear projection display apparatus. Besides, FIG. 3 is an exploded perspective view showing a general configuration of the rear projection display apparatus.

In this embodiment, the video display screen of the rear projection display apparatus is, for example, of the 50-inch type, and the front-rear dimension (thickness) of the display is as small as 30 cm, for example.

Numeral 1 in FIGS. 1 to 3 denotes the rear projection display apparatus. As shown in FIG. 3, the rear projection display apparatus 1 has a configuration in which, to a display unit 2 provided with a screen 3 of the rear projection type at its front side, an outer frame 4 and a cover frame 6 are mounted from the front side, and a rear cover 5 is mounted from the rear side. Here, the outer frame 4, the cover frame 6 and the rear cover 5 constitute a structure body (outer box) of the rear projection display apparatus 1.

The screen 3 has a structure in which a front-side transparent glass plate with its front surface matt treated and with a lenticular lens sheet adhered to its rear surface and a rear-side transparent glass plate with a Fresnel lens sheet adhered to its rear side are so disposed as to keep a predetermined gap therebetween.

As shown in FIG. 1, the cover frame 6 having a rectangular frame-like shape is disposed in the periphery of the screen 3 on the front side, the outer frame 4 having a horizontally elongate rectangular frame-like shape is disposed in the periphery of the cover frame 6, and the rear cover 2 is provided on the rear side so as to cover the display unit 2 (see FIG. 2). Incidentally, numeral 7 in FIG. 1 denotes a base part cover provided on the front lower side of the display unit 2.

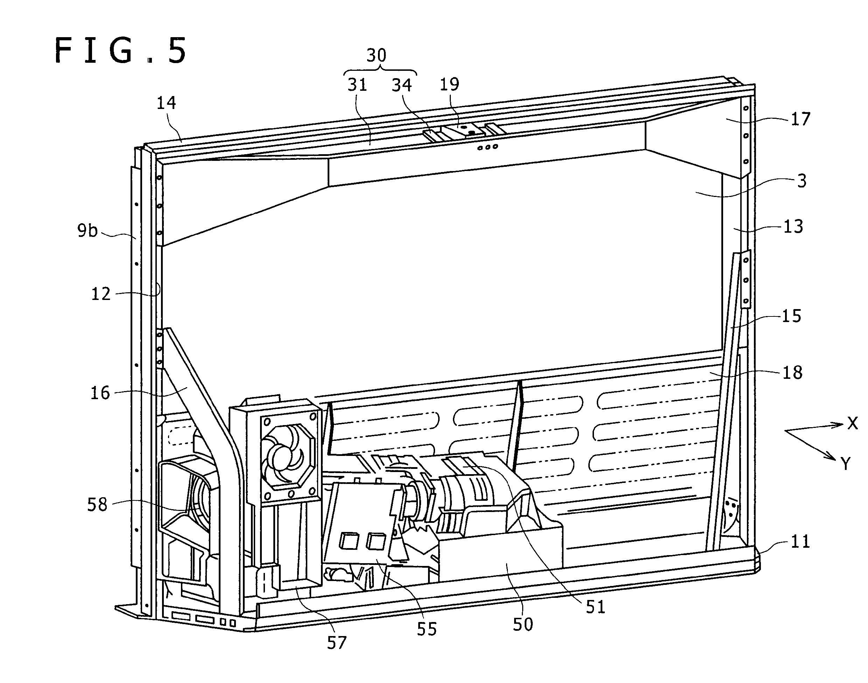

In addition, as shown in FIG. 2, the rear cover 5 provided on the rear side of the rear projection display apparatus 1 has a configuration in which a mirror adjusting part lid 5a is provided at an upper portion, a cover 5b is provided for a box-like recessed part for containing an electric circuit unit which is not shown, and a cooling fan cover 5c is provided at a position corresponding to a cooling fan unit 57 for cooling a lamp (not shown) provided in a lamp house 58 in the display unit 2 (see FIG. 5). Here, the mirror adjusting part lid 5a is destined to be opened to expose a mirror holding plate 34 (described later) in adjusting a projection mirror 30 (described later).

Furthermore, as shown in FIG. 2, speaker units 8, 8 each provided integrally with a decorative panel on the front side thereof are provided in vertically elongate regions formed between left and right portions of the outer frame 4 and left and right portions of the rear cover 5.

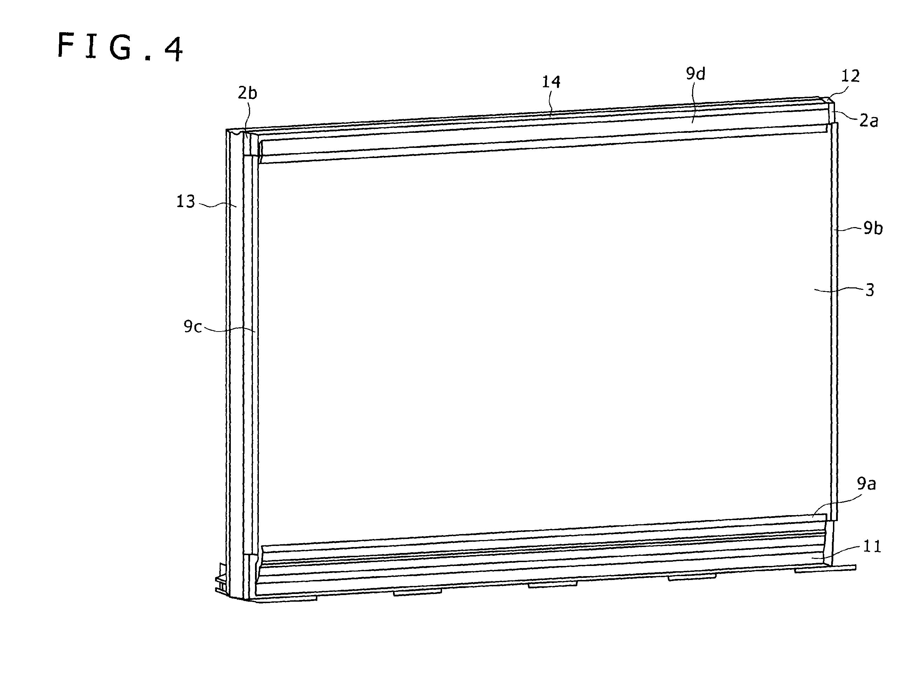

Now, the display unit 2 shown in FIG. 3 will be described below referring to FIGS. 4 to 9.

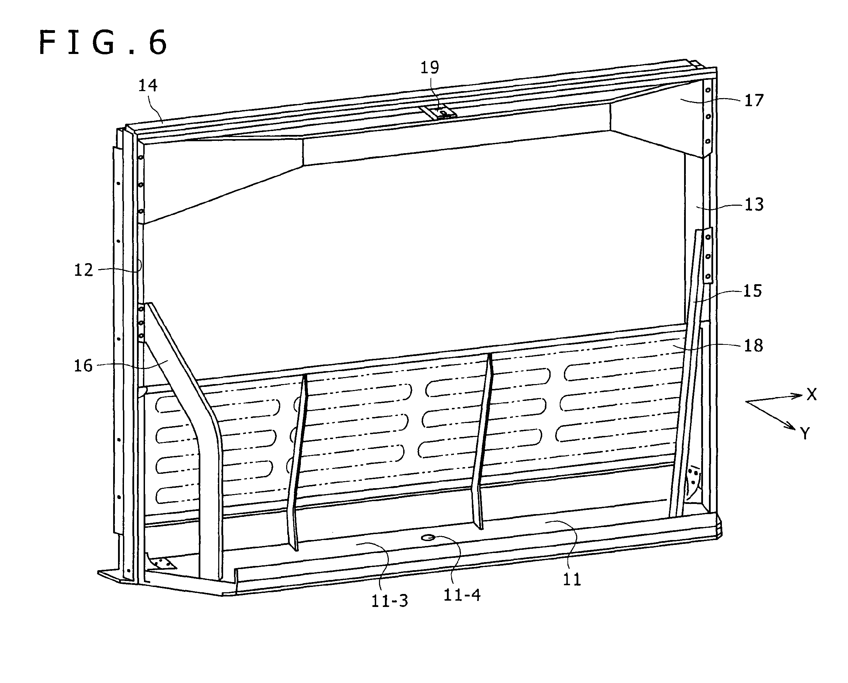

FIG. 4 is a perspective view, from the front side, of the display unit 2; FIG. 5 is a perspective view, from the rear side, of the display unit 2; and FIG. 6 is a perspective view, from the rear side, of a frame structure body of the display unit 2.

As shown in FIG. 4, the display unit 2 has the screen 3 inside a substantially rectangular frame composed of a laterally long bottom frame 11 disposed on the bottom side, left and right side frames 12 and 13 disposed upright on the left and right of the bottom frame 11, and a top frame 14 provided on the upper end side of the side frames 12, 13. The outer periphery of the screen 3 are retained by screen retainers 9a, 9b, 9c and 9d so that the screen 3 would not come out of position. Incidentally, mirror bearings 2a and 2b in FIG. 4 are for engagement with a shaft 38a of a shaft piece 38 provided for the projection mirror 30 which will be described later.

Besides, as shown in FIG. 5, the display unit 2 includes the lamp house 58 and the cooling fan unit 57 on the rear side of the bottom frame 11; additionally, there is provided an optical unit 50 which separates the light from the lamp into the three primary colors of light, namely, R (red), G (green) and B (blue), forms three color pictures through three liquid crystal panels (not shown), and projects the pictures via a projection window 51. As the three liquid crystal panels, in this embodiment, reflection-type liquid crystal image display panels are used. Incidentally, numeral 55 in FIG. 5 denotes a projection control circuit board for controlling the pictures on the three liquid crystal panels incorporated in the optical unit 50.

In addition, as shown in FIG. 5, the display unit 2 has a configuration on the rear side in which a left frame support 16 is provided between the left side frame 12 and the bottom frame 11, a right frame support 15 is provided between the right side frame 13 and the bottom frame 11, and a light shielding plate 18 for avoiding the influence of the light leaking from the optical unit 50 on the screen 3 and functioning also as reinforcement is provided between the left and right side frames 12, 13 and the bottom frame 11.

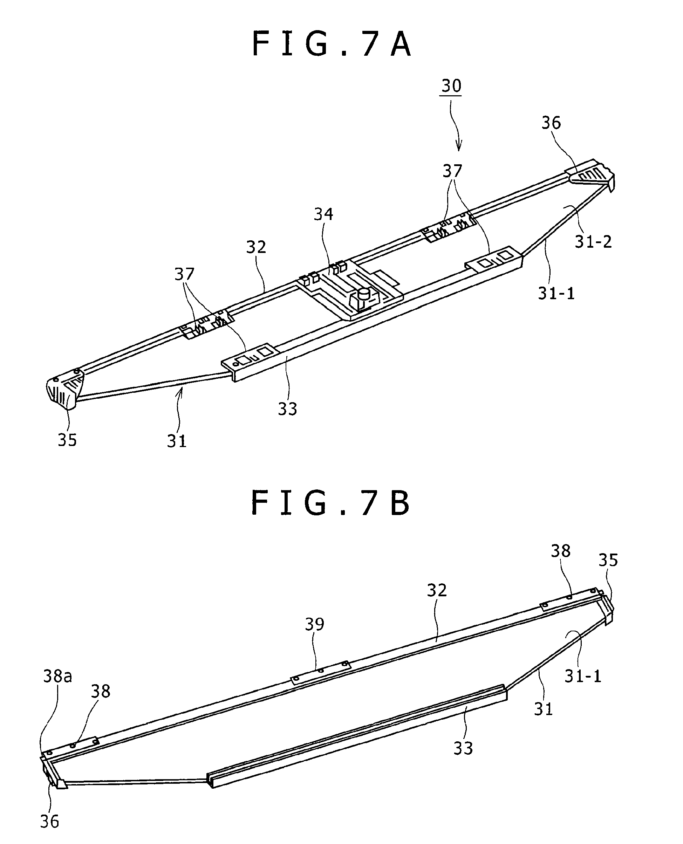

Further, as shown in FIG. 5, the display unit 2 is provided with a mirror support 17 composed of a bent sheet metal, at upper end portions of the left and right side frames 12 and 13. The mirror support 17 is so shaped, as viewed from the upper side thereof, as to form a trapezoidal frame together with the top frame 14. A mirror fixing plate 19 is bridgingly provided substantially at a central position between the top frame 14 and the mirror support 17 (FIG. 6). Incidentally, a mirror holding plate 34 (described later) is engaged with the mirror fixing plate 19, whereby the projection mirror 30 shown in FIGS. 7A and 7B is positioned and fixed.

The principle of projection onto the screen 3 by the display unit 2 configured as just-mentioned will be described.

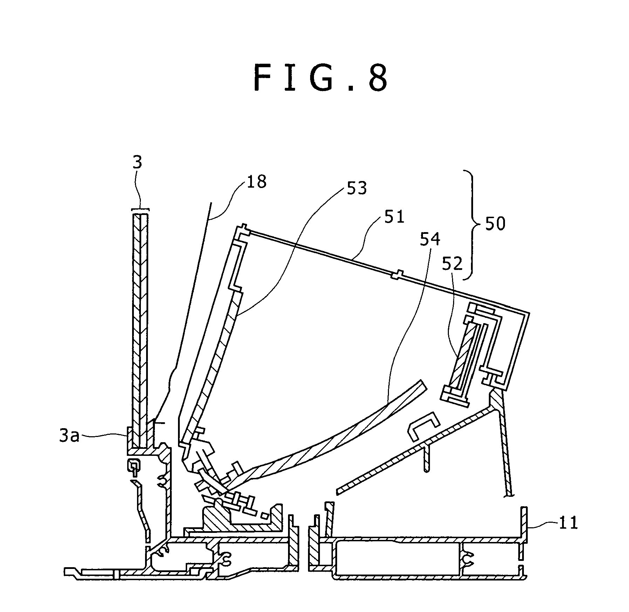

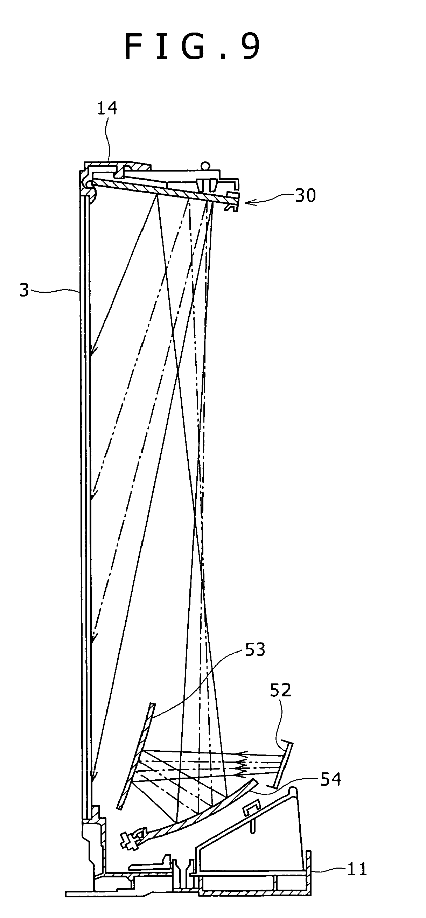

FIG. 8 is a sectional view taken at the center of the projection window 51 shown in FIG. 5, around the optical unit 50. The R, G and B light pictures formed by the three liquid crystal panels as above-mentioned are synthesized into a picture, which is projected from the viewer's side of the surface of sheet of FIG. 8 toward a plane mirror 52 on the depth side (opposite side), and the optical path is bent by about 90° by the plane mirror 52, so that the picture-carrying light is incident on a convex mirror 53. As shown in FIG. 9 showing the entire part of the optical path, the picture-carrying light reflected by the convex mirror 53 is reflected further by a non-spherical mirror 54, to be transmitted through the projection window 51, and is then reflected by a plane mirror 31 of the projection mirror 30, to be projected on the screen 3 on the front side.

In the display unit 2 according to this embodiment, as shown in FIG. 9, the ratio of the height of the display unit 3 to the front-rear distance (depth) from the screen 3 on the front side to the plane mirror 52 in the optical unit 50 is about 10:3, indicating that the height is large as compared with the front-rear direction (depth). In other words, the angle formed between the direction of projection onto the plane mirror 52 and the horizontal direction is extremely larger, as compared with that in a rear projection display apparatus according to the related art.

Therefore, even a slight deformation of the frame structure body shown in FIG. 6 would cause distortion or fuzziness in the picture projected on the screen 3. Accordingly, it is essential to the display unit 2 in this embodiment that a frame structure body less liable to change (deteriorate) with age and capable of maintaining a high positional accuracy be adopted and that fine adjustment of the angle of the projection mirror 30 can be easily carried out, for example, after movement such as transportation.

Now, the frame structure of the display unit 2 in this embodiment and a structure for mounting and adjusting the mirror will be sequentially described below.

First, the frame structure body in the display unit 2 according to this embodiment will be described referring to FIGS. 1, 4, 6, and 10 to 16.

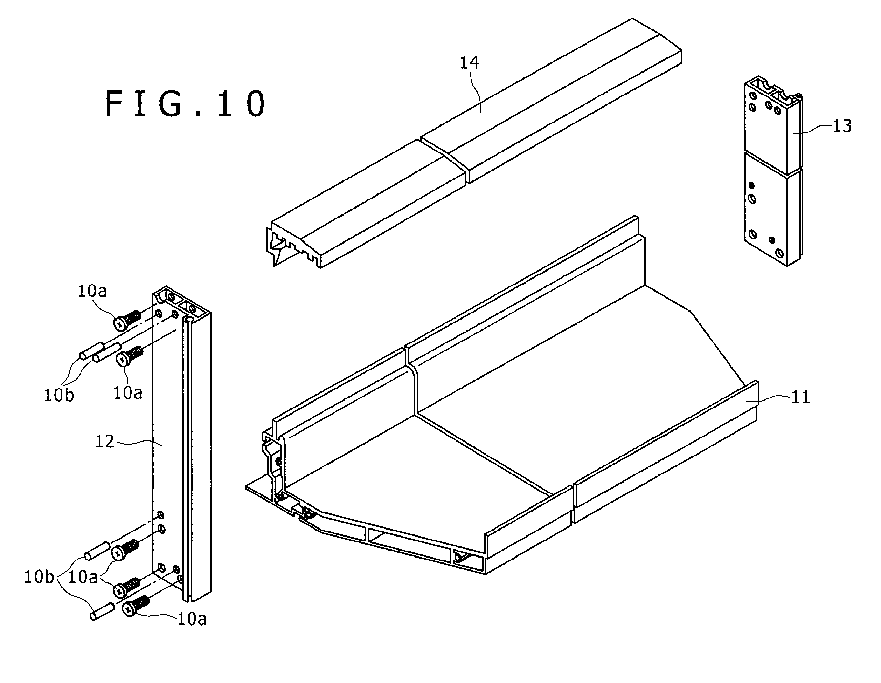

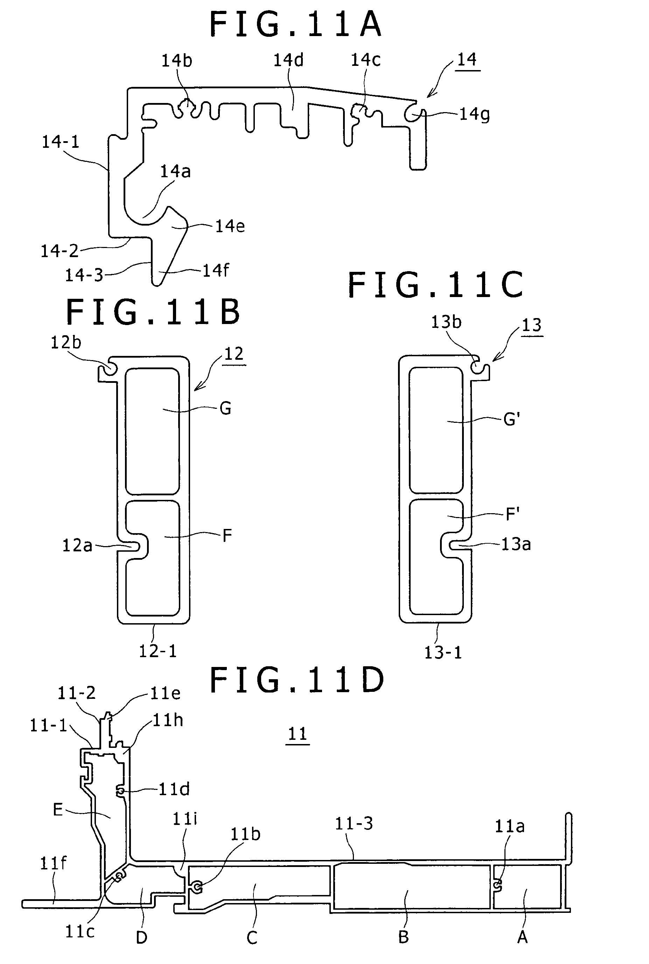

FIG. 10 is a perspective view, partly omitted, of the bottom fame 11, the left and right side frames 12, 13 and the top frame 14, of the frame structure body shown in FIG. 6. FIGS. 11A to 11D are sectional views of the four frames, in which FIG. 11A shows the top frame 14, FIG. 11B shows the right side frame 13, FIG. 11C shows the left side frame 12, and FIG. 11D shows the bottom frame 11.

These frames 11, 12, 13, 14 are formed in rod-like or plate-like shape by extrusion of an alloy of aluminum or the like through such dies that they assume uniform sectional shapes as shown in FIG. 10 and FIGS. 11A to 11D. Here, the left and right side frames 12 and 13 are members extruded by use of the same die.

As shown in FIG. 11D, the bottom frame 11 has a structure in which four space regions A to D substantially rectangular in sectional shape are provided by use of partition walls in a bottom line portion of a roughly L-shaped form, and a single space region E substantially rectangular in sectional shape is provided in a rising portion of the roughly L-shaped form. In addition, screw passing grooves 11a, 11b, 11c, 11d each having a roughly cylindrical inside surface for a fixing screw 10a (described later) are provided integrally in the bottom frame 11, at four positions shown in FIG. 11D. Besides, the face 11-1 on the upper side of the space region E shown in FIG. 11D of the bottom frame 11 is provide with a plate-like projection 11e along the direction perpendicular to the surface of sheet of FIG. 11D, and the screen 3 is mounted on the face 11-1 and the surface 11-2 of the plate-like projection 11e.

In addition, the partition walls in the section of the bottom frame 11 are provided with thick wall parts 11h and 11i, and a plate-like part 11f is extendingly provided on the left side in FIG. 11D of the bottom frame 11. Incidentally, spring pins 10b (described later) for positioning the side frames 12, 13 are erectingly provided at the thick wall part 11h, 11i, and the plate-like part 11f constitutes a base part, which is covered with the base part cover 7 shown in FIG. 1.

As shown in FIG. 11B, the left side frame 12 has a structure in which two space regions F and G are formed by use of a partition wall at a substantially central position of a tube roughly rectangular in section, a groove 12a recessed to the side of the region F is formed, and a groove 12b having a roughly cylindrical inside surface is formed at an outside wall of the region G. Besides, as shown in FIG. 10, the left side frame 12 is provided in its upper portion with screw passing holes for two fixing screws 10a and with passing holes for two spring pins 10b, and is provided in its lower portion with screw passing holes 10a for three fixing screws 10a and with passing holes for two spring pins 10b.

Here, the screw passing holes provided in the upper portion of the left side frame 12 for passing the two fixing screws 10a therethrough are provided at positions corresponding to screw passing grooves 14b and 14c in the top frame 14 to be described later, and the passing holes for the two springs pins 10b are provided at positions corresponding to thick wall parts 14d and 14e of the top frame 14 to be described later (see FIG. 11A).

In addition, the three screw passing holes provided in the lower portion of the left side frame 12 are provided at positions corresponding to the screw passing grooves 11b, 11c and 11d in the bottom frame 11, and the passing holes for the two spring pins 10b are provided at positions corresponding to the thick wall parts 11h and 11i of the bottom frame 11 (see FIG. 11D).

Similarly, as shown in FIG. 11C, the right side frame 13 has a structure in which two space regions F' and G' are formed by use of a partition wall at a substantially central position of a tube roughly rectangular in section, a groove 13a recessed to the side of the region F' is formed, and a groove 13b is formed on the outside of the region G'. Besides, a total of five screw passing holes and a total of four spring pin passing holes are provided at predetermined positions.

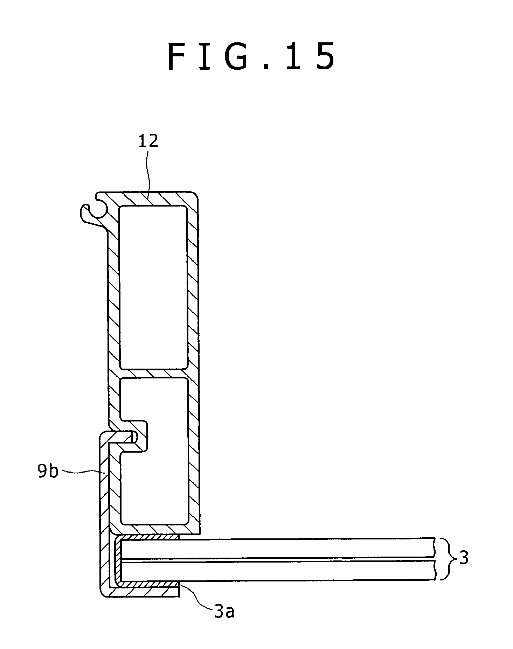

Incidentally, the grooves 12a and 13a in the left and right side frames 12 and 13 are used for fitting therein bent portions provided in longitudinal sides of the left and right screen retainers 9b and 9c shown in FIG. 4 above, while the grooves 12b and 13b are used for fitting therein a seal member formed of a flexible foam of foamable resin (see FIG. 15).

As shown in FIGS. 10 and 11A, the top frame 14 is formed to be roughly inverse L-shaped in section, and a portion kept substantially horizontal is integrally provided at its two positions with screw passing grooves 14b and 14c having a roughly cylindrical inside surface for passing the fixing screws 10a therein. In addition, on the lower side of a drooping face 14-1 on the left side in FIG. 11A of the top frame 14, a face 14-2 is formed orthogonally to the drooping face 14-1. Further, a projection 14f roughly inverse triangular in section and having a face 14-3 orthogonal to the face 14-2 is formed along the direction perpendicular to the surface, and the screen 3 is disposed so as to abut on the face 14-3 of the projection 14f.

In addition, the top frame 14 is provided with thick wall parts 14d and 14e, and a recessed groove 14a having a cylindrical surface is formed on the upper side of the projection 14f shown in FIG. 11A of the top frame 14. Incidentally, the cylindrical-surfaced recessed groove 14a serves as a sliding surface for turning of the projection mirror 30, and the spring pins 10b for positioning the side frames 12 and 13 are erectingly provided on the thick wall parts 14d and 14e.

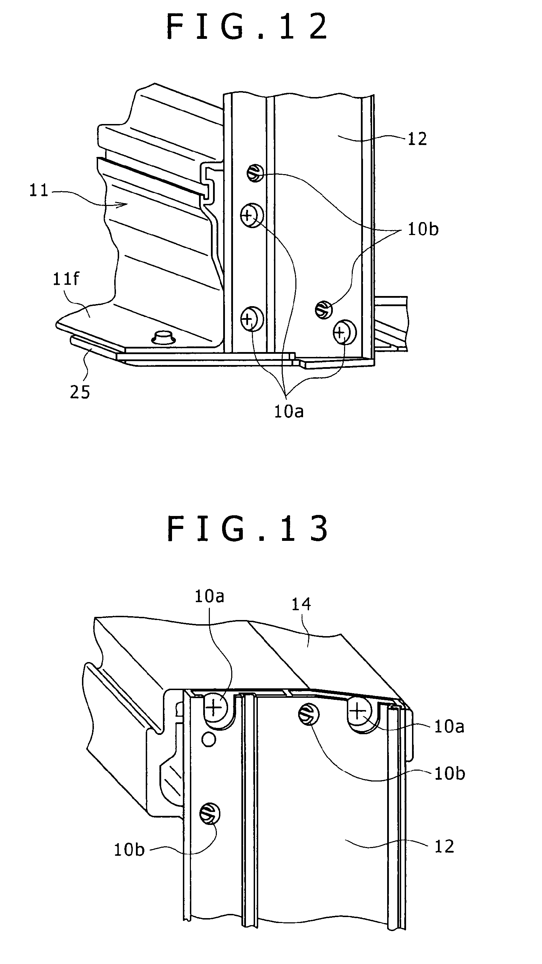

In assembling the frames 11, 12, 13 and 14 configured as above, first, the fixing screws 10a are screw-engaged into the screw passing grooves 11b, 11c and 11d provided at the end side face portion of the bottom frame 11 shown in FIG. 10 through the three each screw passing holes provided in the lower portions of the left and right side frames 12 and 13, to tentatively fix the bottom frame 11 and the left and right side frames 12 and 13 to each other (see FIG. 12). Then, the fixing screws 10a are screw-engaged into the screw passing grooves 14b and 14c provided at the end side face portion of the top frame 14 through the two each screw passing holes provided in the upper portions of the left and right side frames 12 and 13, to tentatively fix the top frame 14 to the left and right side frames 12 and 13 (see FIG. 13).

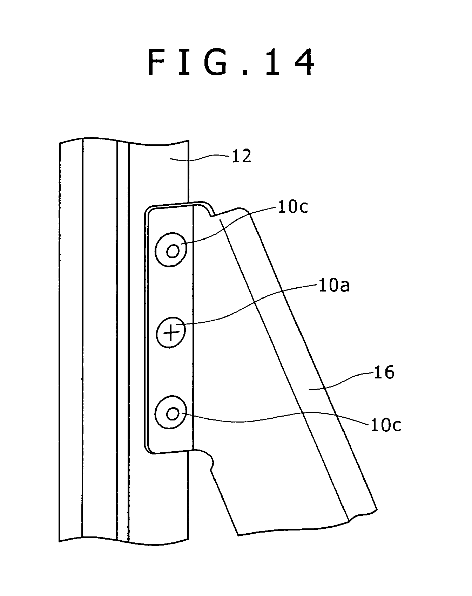

Thereafter, as shown in FIG. 6, the right frame support 15 is tentatively fixed in a bracing manner between the bottom frame 11 and the right side frame 13 by the fixing screws 10a, and the left frame support 16 is tentatively fixed in a bracing manner between the bottom frame 11 and the left side frame 12 by the fixing screws 10a (see FIG. 14).

Here, the right frame support 15 and the left frame support 16 are provided in the bracing manner relative to the bottom frame 11 so as to form an angle of, for example, about 45° to the top frame 14, as viewed from the upper side of the display unit 2, so that the rigidity of the assembly against deforming forces in the x-direction and the y-direction in FIG. 5 after permanent fixing will be enhanced.

As a result, a roughly rectangular screen frame composed of the frames 11, 12, 13 and 14 and provided with the screen 3 is formed, and the frame structure body including the left and right frame supports 15 and 16 for supporting the screen frame to prevent the screen frame from falling down is formed.

Incidentally, the base part plate 25 in FIG. 12 is a metal plate provided on the lower side of the plate-like part 11f of the bottom frame 11, for mounting thereto the plate part cover 7 shown in FIG. 1.

The screen frame of the frame structure body composed of the frames 11, 12, 13 and 14 and the left and right frame supports 15 and 16 tentatively fixed is permanent-fixed by the fixing screws 10a so that the left and right side frames 12 and 13 are set perpendicular to the face 11-3 shown in FIG. 6 of the bottom frame 11, and that the face 11-2 shown in FIG. 11D of the bottom frame 11, the face 12-1 shown in FIG. 11B of the left side frame 12, the face 13-1 shown in FIG. 11C of the right side frame 13, and the face 14-1 shown in FIG. 11A of the top frame 14 are set flat with each other, the settings being made, for example, by use of assembly jigs (not shown) or the like.

In order that the permanent-fixed condition can be maintained even upon stacking of the fixing screws 10a, larger passing holes than the original are bored in the thick wall parts 11h and 11i of the bottom frame 11 and the thick wall parts 14d and 14e of the top frame 14 from the side of the passing holes for the four spring pins 10b provided respectively on the upper and lower sides of the left and right side frames 12 and 13 by a drill or the like.

Besides, the bottom frame 11 and the top frame 14 are slacklessly positioned relative to the left and right side frames 12 and 13 by the spring pins 10b erectingly provided in the holes in the thick wall parts 11h, 11i, 14d and 14e. Here, in boring the holes in which to erectingly provide the spring pins 10b, a drill with a diameter larger than the diameter of the spring pin passing holes is used so that the diameter of the passing holes for the spring pins 10b after the boring will be equal to the diameter of the holes in the thick wall parts 11h, 11i, 14d and 14e and that no chattering will be generated between the spring pins 10b erectingly provided in these holes and the left and right side frames 12 and 13.

In addition, the left and right frame supports 15 and 16 are fixed and reinforced by use of rivets 10c shown in FIG. 14 or the like so that deformation thereof can be suppressed to a slight level even when a great force is exerted on the whole frame. Here, the reason why the reinforcement of the left and right frame supports 15 and 16 is not conducted by use of screws lies in that a sufficient fastening strength by screws cannot be obtained against a large deforming force, since the fixing of the left and right frame supports 15 and 16 is conducted relative to the comparatively thin side wall faces of the left and right side frames 12 and 13 and the bottom frame 11 which are extruded members.

In addition, as shown in FIGS. 6 and 8, at a lower portion of the screen frame composed of the frames 11, 12, 13 and 14, there is provided a light shielding plate 18 for shielding the light leaking to the screen and serving also as a reinforcement plate for restraining the deformation of the screen frame in the direction of arrow in the figure. Here, for enhancing the rigidity of the light shielding plate 18 formed of a comparatively thin sheet metal, the light shielding plate 18 is provided with a plurality of oblong recessed parts and its upper end lower edges are folded back, as shown in FIG. 6.

Besides, the mirror support 17 is fixed on the upper side of the left and right side frames 12 and 13, as above-mentioned, and the mirror fixing plate 19 is provided between the mirror support 17 and the top frame 14.

In this way, the frame structure body in the display unit 2 in this embodiment is assembled.

In the frame structure body of the rear projection display apparatus in this embodiment configured as above, the screen frame for fixing the screen 3 is configured by use of the bottom frame 11, the left and right side frames 12 and 13, and the top frame 14 which are each formed by extrusion of a metal such as an aluminum alloy to be uniform in sectional shape, to be light in weight and to have high rigidity. In this case, the fixing screws 10a and the spring pin 10b are passed through the fixing screw passing grooves 11a to 11d and the thick wall parts 11h and 11i provided in the sections of the bottom frame 11 and the top frame 14, whereby the screen frame is assembled with high accuracy and so as to be free of slackening.

In addition, for restraining deformation of the screen frame, the left and right frame supports 15, 16 are bracingly disposed between the bottom frame 11 and the left and right side frames 12, 13, whereby the frame structure body is strengthened.

Further, the screen 3 having a damper sheet 3a on its rim is provided in the state of being retained by the screen retainers 9a, 9b, 9c, 9d so as to be positioned by the faces 11-1 and 11-2 (FIG. 11D) of the bottom frame 11 constituting the screen frame and the face 14-3 (FIG. 11A) of the top frame 14 constituting the screen frame.

In addition, for maintaining the accuracy of the projection mirror 30, the mirror support 17 having the mirror fixing plate 19 (FIG. 6) substantially at the center thereof in relation to the left and right side frames 12 and 13 is provided at an upper portion of the screen frame, whereby rigidity is secured. Besides, one end side of the projection mirror 30 is turnably mounted in the cylindrical-surfaced recessed groove 14a provided as one body with the top frame 14, and the other end side of the projection mirror 30 is mounted by the mirror holding plate 34 (FIG. 7A) so as to have a predetermined inclination angle.

Further, the optical unit 50 is positioned by positioning pins (not shown) provided in the positioning holes 11-4 (see FIG. 6) of the bottom frame 11.

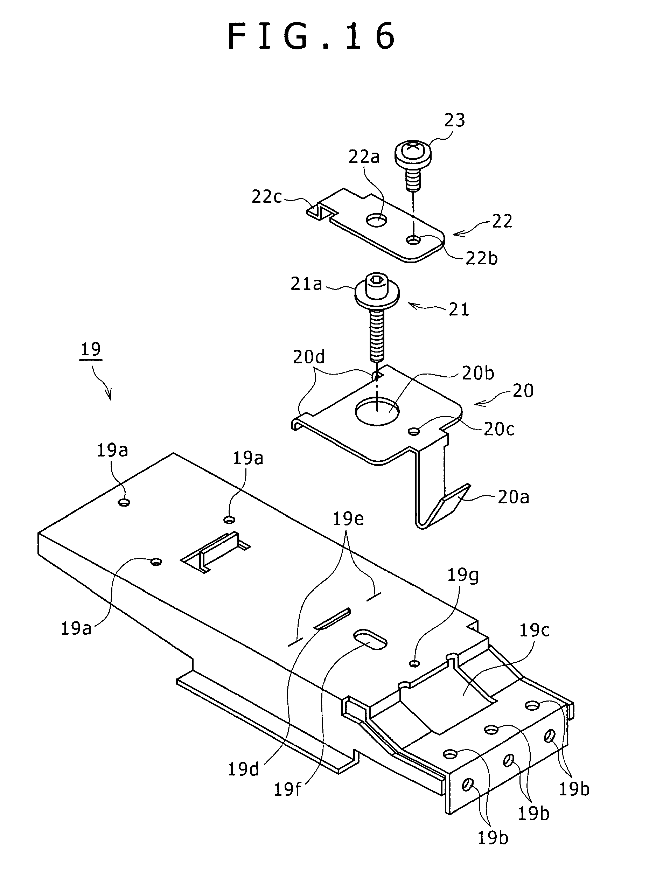

Now, a structure for mounting the projection mirror 30 on the frame side will be described below referring to FIGS. 16 to 18.

As shown in FIG. 16, which is an exploded perspective view, the mirror fixing plate 19 is produced in a substantially line-symmetric shape by bending a sheet metal of steel or the like. The sheet metal is so bent that the mirror fixing plate is substantially rectangular in shape as viewed from above, the cross section on one end side of the rectangle is angular U-shaped, and the cross section at a central portion of the rectangle is in a generally angular U-shaped form with its end edges bent. In addition, the other end side of the mirror fixing plate 19 is provided with a roughly rectangular opening 19c, and is bent, as shown in FIG. 16.

Besides, three screw passing holes 19a for fixing to the top frame 14 is provided on the one end side of the rectangle, a comparatively large-width slit 19d, a slot 19f and a screw hole 19g are provided in a roughly central portion of the rectangle on the center line along the longitudinal direction of the rectangle, two slits 19e are provided on both sides of the slit 19d on opposite sides of the center line, and six screw holes 19b for fixing to the mirror support 17 are provided in a bent part on the other end side of the rectangle.

Numeral 20 in Fig. 16 denotes a tentative support produced by bending an elastic sheet metal of a stainless steel or the like. The tentative support 20 is provided with an engaging pawl 20a, a large round hole 20b, a small round hole 20c, and two bent parts 20d. Here, the two bent parts 20d are so sized that they can be inserted into the two slits 19e in the mirror fixing plate 19, and are so located that in the condition where the bent parts 20d are inserted, the large round hole 20b corresponds to the slot 19f, and the small round hole 20c to the screw hole 19g. In addition, the large round hole 20b is so sized that, even when an adjusting screw 21 (described later) is moved inside the slot 19f in the mirror fixing plate 19, the large round hole 20b does not interfere with a flange part 21a of the adjusting screw 21. The small round hole 20c is set to be larger than the screw diameter of a fixing screw 23.

In addition, numeral 21 in FIG. 16 denotes the adjusting screw. The adjusting screw 21 has a configuration in which, for example, the circular flange part 21a is formed as one body with a head part of a hexagonal-holed bolt. The diameter and the thickness of the flange part 21a are set to be smaller than the large round hole 20b in the tentative support 20 and to be larger than the thickness of the tentative support 20, respectively. The adjusting screw 21 has fine threads, with a screw pitch of 0.2 mm, for example.

Besides, numeral 22 in FIG. 16 denotes a fixing plate for fixing the tentative support 20. The fixing plate 22 is provided with large and small round holes 22a and 22b, and is provided at its one end with a bent part 22c roughly Z-shaped in longitudinal section. The large and small round holes 22a and 22b are located at positions corresponding respectively to the large and small round holes 20b and 20c in the tentative support 20. The large round hole 22a is larger in diameter than the head part of the adjusting screw 21, and the small round hole 22b is larger than the screw diameter of the fixing screw 23.

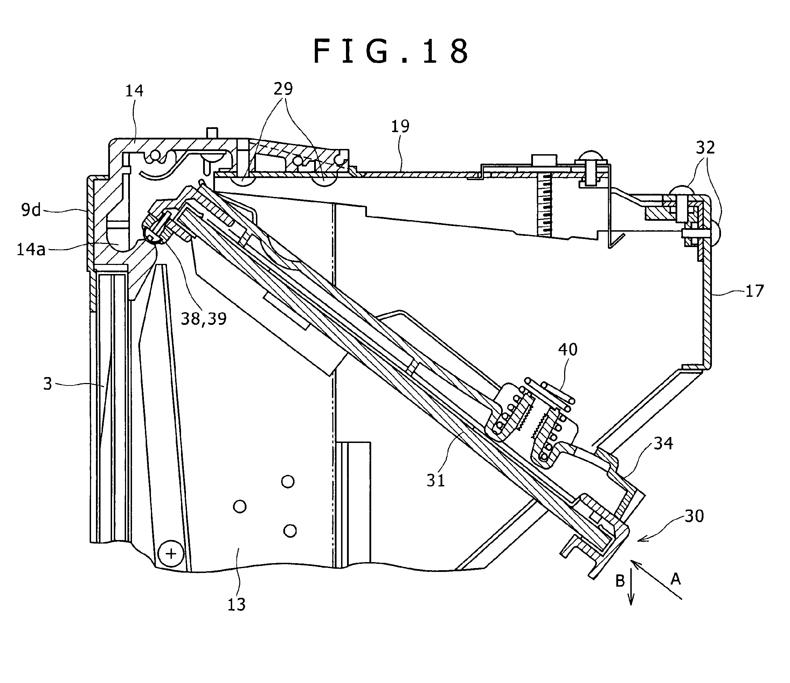

The mirror fixing plate 19 configured as above is bridgingly provided between roughly central portions of the top frame 14 and the mirror support 17, as above-mentioned (FIG. 6). As shown in FIG. 18, of the mirror fixing plate 19, the side where the three screw passing holes 19a are provided is fixed to the top frame 14 by three fixing screws 29 screw-engaged from below, and the side where the opening 19c and the six screw holes 19b are provided is fixed to the mirror support 17 by six screws 32.

As a result, the mirror fixing plate 19 is fixed to both the top frame 14 and the mirror support 17, and also plays the role of a reinforcement member for restraining deformation of the mirror support 17 produced by bending a sheet metal.

Meanwhile, the tentative support 20, the adjusting screw 21, the fixing plate 22, and the fixing screw 23 as above-described are used in a predetermined sequence in mounting the projection mirror 30 to the top frame 14 and the mirror support 17. Here, the condition where the component parts are mounted to the mirror fixing plate 19 will be described briefly.

As shown in FIG. 16, first, the bent parts 20d, 20d of the tentative support 20 are inserted into the slits 19e, 19e in the mirror fixing plate 19, and then the adjusting screw 21 is passed through the slot 19f. In this instance, the flange part 21a of the adjusting screw 21 is arranged in the large round hole 20b in the tentative support 20 so as not to interfere with the large round hole 20b. Next, the fixing plate 22 is so mounted that the bent part 22c is caught by the slit 19d in the mirror fixing plate 19, then the fixing screw 23 is passed through the round holes 22b and 20c and is screw-engaged into the screw hole 19g in the mirror fixing plate 19, whereby the flange part 21a of the adjusting screw 21 is pressed by the fixing plate 22 and the adjusting screw 21 is fixed so as not to slacken.

Now, the projection mirror 30 will be describe below referring to FIGS. 5, 7A, 7B, and 17 to 21.

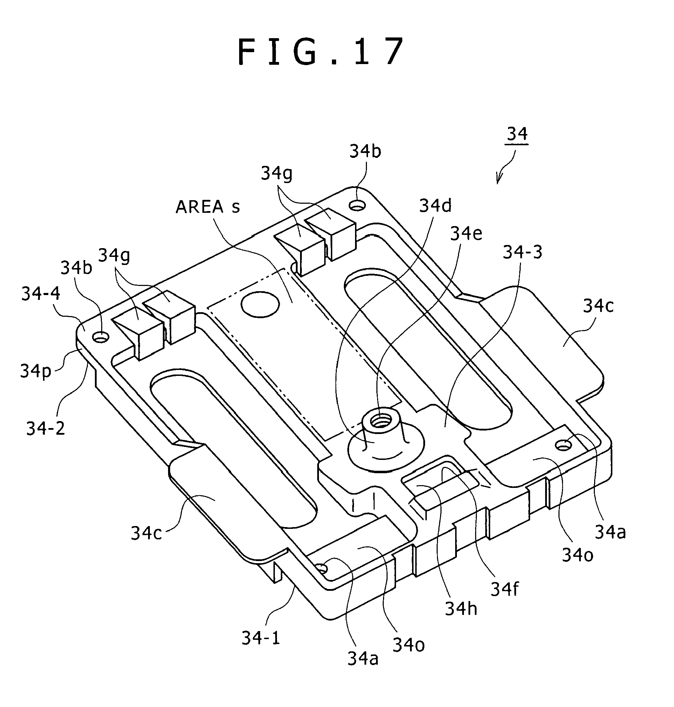

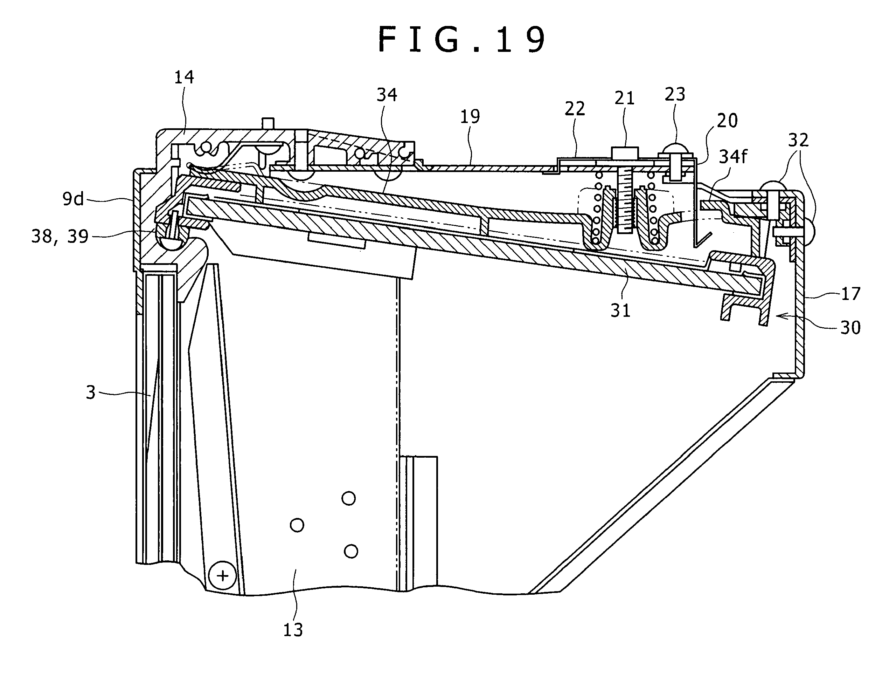

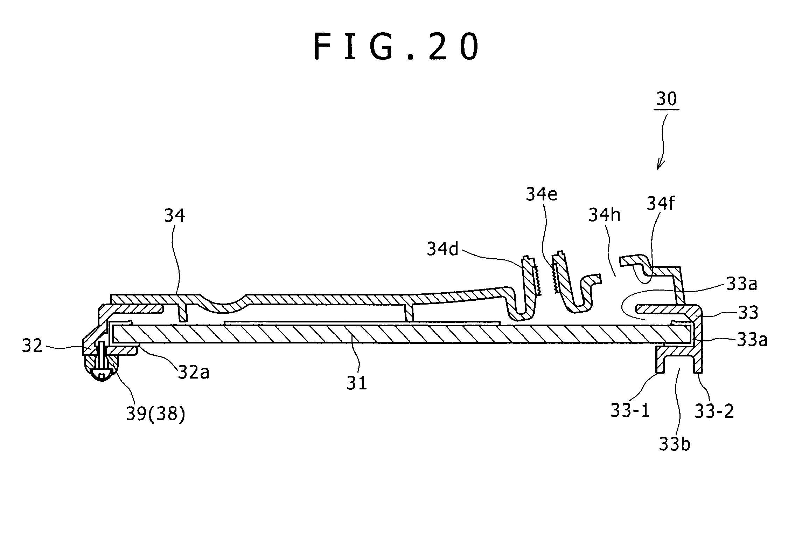

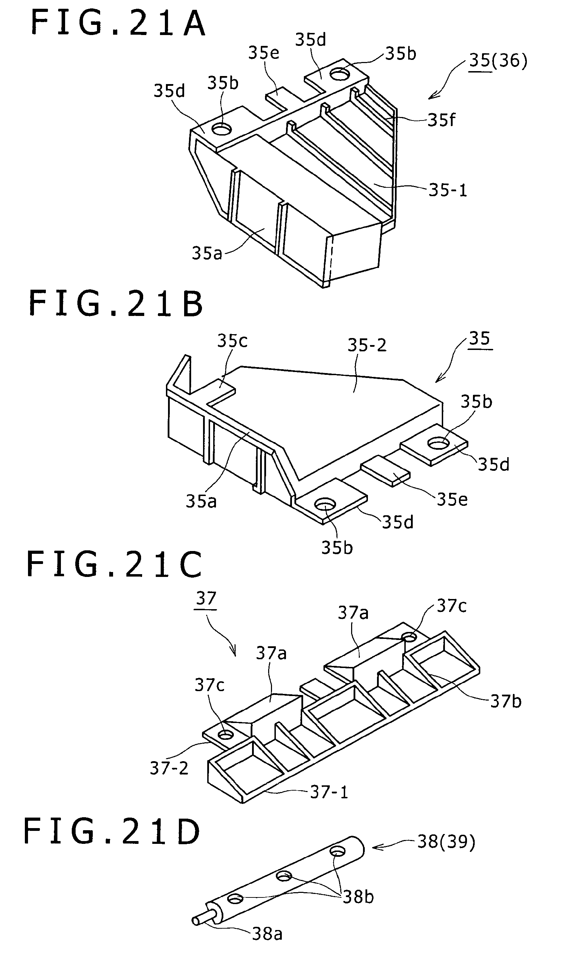

Here, FIG. 7A is a perspective view, from the upper side, of the projection mirror 30; and FIG. 7B is a perspective view, from the upper side, of the projection mirror 30 in its inverted state. FIG. 17 is a perspective view of a mirror holding plate 34, FIG. 18 is a sectional view showing the condition immediately before the mounting of the projection mirror 30 shown in FIG. 7A to the top frame, and FIG. 19 is a sectional view showing the condition where the projection mirror 30 is mounted to the top frame, taken along the center axis of the projection mirror 30. FIG. 20 is a sectional view taken at the center axis of the projection mirror shown in FIG. 7A. FIG. 21A is a perspective view, from the upper side, of a left support piece; FIG. 21B is a perspective view, from above, of the left support piece in its inverted state; FIG. 21C is a perspective view of a retainer piece; and FIG. 21D is a perspective view of a shaft piece.

As shown in FIGS. 7A and 7B, the projection mirror 30 includes the plane mirror 31 composed of a glass plate having a reflective surface 31-1, long and short two holding frames 32 and 33, a mirror holding plate 34, left and right support pieces 35 and 36, four retainer pieces 37 and three shaft pieces 38, 38 and 39, belt-like mirror protective sheets 32a and 33a (see FIG. 20), and the like.

As shown in FIGS. 7A and 7B, the plane mirror 31 is a glass plate provided with right-angled triangular cutouts at two corner portions on the side of two shorter sides of one of the opposed longer sides of a rectangular shape, and a reflective film is formed on one surface of the glass plate. Here, the reflective film is formed by vapor depositing a metal such as aluminum on the glass plate.

As indicated by hatching in FIG. 20, the long holding frame 32 is a frame formed by extrusion of an aluminum alloy or the like and being roughly angular U-shaped in section and having a groove, the length thereof is approximately equal to the length of the longer sides of the plane mirror 31, and the groove width is set larger than the plane mirror 31. Besides, the long holding frame 32 is provided with screw holes (not shown) at predetermined positions.

On the other hand, as indicated by hatching in FIG. 20, the short holding frame 33 is a frame formed by extrusion of an aluminum alloy or the like, roughly y-shaped in section, and having large and small two grooves 33a and 33b, the length thereof is approximately equal to the length of the cutout-side side opposite to the longer side of the plane mirror 31, and the groove width of the large groove 33a is set larger than the thickness of the plane mirror 31. Besides, the short holding frame 33 is provided with screw holes (not shown) at predetermined positions. Incidentally, two side walls 33-1 and 33-2 of the small groove 33b are formed as reinforcement ribs for increasing the rigidity of the short holding frame 33 and making the short holding frame 33 less liable to be deformed.

As shown in FIG. 7A, the mirror holding plate 34 is for fixing the two holding frames 32 and 33 at their roughly central portions. The mirror holding plate 34 has a complicated shape having a roughly rectangular line-symmetric general shape and having recessed and projected shapes, as shown in FIG. 17, and has a thin wall structure as shown in FIG. 20; therefore, the mirror holding plate 34 is produced by die-casting of an aluminum alloy or the like and thereafter finishingly processing predetermined portions of the cast body.

As shown in FIG. 17, the mirror holding plate 34 has a configuration in which, first, two elongate boxes are arranged side by side in parallel, and, in connection with upper edge portions of the two boxes, a portion of which the depth is larger than the longer sides of the boxes and the width is approximately equal to the outermost width at the upper edge portions of the two boxes arranged side by side is formed. Then, a flat plate having a face 34-4 is integrally provided on the upper side, and the bottom surfaces of the two boxes are left exposed. In this case, an overhang part 34p is provided on the depth side in FIG. 17 of the face 34-4, and flat surface parts 34o, 34o are formed on the viewer's side of the face 34-4.

Further, in the mirror holding plate 34, outer peripheral edges of a half on the viewer's side in FIG. 17 are extended upward to form side walls, and a slant surface 34-4 is formed on the viewer's side in FIG. 17 continuous to a region S, between the two boxes, of the face 34-4.

As shown in FIG. 17, on the upper side of the mirror holding plate 34, there are arranged a roughly cylindrical spring guide 34d provided on the center line and on the slant surface 34-3, a screw hole 34e provided along the center axis of the cylindrical portion of the spring guide 34d, a roughly rectangular opening 34h, and an engageable part 34f. In addition, as shown in FIG. 17 on opposite sides of the center line of the line symmetry, the overhang part 34p is provided with reinforcement projected parts 34g triangular in section, and roughly rectangular wing-like grips 34c, 34c are provided on the upper side of both side surfaces on opposite sides of the spring guide 34d.

Here, as shown in FIG. 20, the center axis of the spring guide 34d is slightly inclined relative to the plane mirror 31. In this case, the inclination angle is so set that the center axis is substantially orthogonal to the upper face of the mirror fixing plate 19 in the condition where the projection mirror 30 is mounted in position as shown in FIG. 19. Besides, the opening 34h is provided with such a width that the engaging pawl 20a of the above-mentioned tentative support 20 can be removably inserted therein, and the engageable part 34f is provided at such a position as to make contact with the tip end of the engaging pawl 20a in the process of putting the engaging pawl 20a into the inserted state shown in FIG. 19.

The overhang part 34p shown in FIG. 17 of the mirror holding plate 34 has a lower surface 34-2 finished to be a flat surface, and is provided with screw passing holes 34b, 34b. In addition, on the side where the engageable part 34f and the flat surface parts 34o. 34o are formed, of the mirror holding plate 34, the flat surface parts 34o, 34o have lower surfaces 34-1 finished to be flat surfaces and are provided with screw passing holes 34a, 34a.

Incidentally, the above-mentioned holding frame 32 is fixed using the lower surface 34-2 as a reference, and the above-mentioned holding frame 33 is fixed using the lower surfaces 34-1 as a reference.

As shown in FIGS. 7A and 7B, the left and right support pieces 35 and 36 symmetrical with each other in shape are provided at left and right end portions of the long holding frame 32, for holding the plane mirror 31 so as to prevent it from coming off from the groove in the holding frame 32.

The support pieces will be described, taking the left support piece 35 as an example.

As shown in FIG. 21A, the left support piece 35 has a structure in which an upper surface 35-1 is provided with a plurality of reinforcement ribs 35f by plastic molding, and, as shown in FIG. 21B, a lower face 35-2 is made to be a substantially flat surface, a side wall 35a is erectingly provided on the 35-2, and a rectangular piece 35c is provided projectingly from the side wall 35a in parallel to the face 35-2. In addition, roughly rectangular pieces 35d, 35d provided with screw passing holes 35b, 35b and a rectangular piece 35e are projectingly provided so that their faces on the upper side in FIG. 21B are stepped relative to the face 35-2.

Besides, the left support piece 35 is so held that its side of the face 35-2 in FIG. 21B is opposed to the side of a glass surface 31-2 of the above-mentioned plane mirror 31, with a predetermined spacing therebetween.

As shown in FIG. 7A, two retainer pieces 37 are provided on each of the holding frames 32 and 33, for holding the plane mirror 31 so as to prevent it from heavily chattering in the grooves in the holding frames 32 and 33.

As shown in FIG. 21C, the retainer piece 37 is formed in a structure provided with a plurality of ribs, light in weight, and comparatively less liable to be deformed, from a plastic resin or the like. The retainer piece 37 is so formed that a step is formed between a lower face 37-1 on the side where roughly triangular reinforcement ribs 37b are provided on the viewer's side in FIG. 21C and a lower face 37-2 on the depth side where screw passing holes 37c and triangular reinforcement projected parts 37a are provided. This step is so sized that, when the retainer piece 37 is screwed to the holding frame 32 or 33 as shown in FIG. 7A, a slight gap is formed between the glass surface 31-2 of the plane mirror 31 exposed on the upper side in FIG. 7A and the face 37-1.

As shown in FIG. 7B, the shaft pieces 38, 38 and 39 is provided on the holding frame 32 on the side of the reflective surface 31-1 of the plane mirror 31 of the projection mirror 30; the shaft piece 39 is provided roughly at the center of the holding frame 32, and the shaft pieces 38, 38 are provided at both end portions of the holding frame 32.

As shown in FIG. 21D, the shaft pieces 38, 39 are each roughly semi-cylindrical in shape, and are each provided in the cylindrical side surface part thereof with three countersunk screw passing holes 38b. Besides, in the shaft piece 38, a slender shaft 38a is projectingly provided at the center of the semi-circle on one end side of the cylinder.

In assembling the projection mirror 30 configured as above, first, the shaft pieces 38, 38 and 39 shown in FIG. 7B and the left support piece 35 are screwed to the holding frame 32, and then the holding frame 32 is screwed to the mirror holding plate 34. In this instance, the fixing by screws (screwing) is so conducted that the center line of the mirror holding plate 34 and the longitudinal direction of the holding frames 32 are orthogonal to each other.

Next, in the condition where the mirror protective sheet 32a (FIG. 20) is disposed at an end edge of the longer side of the plane mirror 31, the plane mirror 31 is fitted into the angular U-shaped groove in the holding frame 32, and one end on the side of the shorter side of the plane mirror 31 is put into abutment on the left support piece 35. In this instance, the glass surface 31-2 is disposed on the side of the mirror holding plate 34.

Subsequently, the larger-width groove of the holding frame 33 is fitted over the plane mirror 31 with the mirror protective sheet 33a disposed at an end edge of a side parallel to the longer side thereof, and the holding frame 33 and the mirror holding plate 34 are fixed to each other by screws.

Finally, the right support piece 36 is put into abutment on the other end on the side of the shorter side of the plane mirror 31, and, in this condition, the right support piece 36 is screwed to the holding frame 32.

In this manner, the projection mirror 30 shown in FIGS. 7A and 7B is assembled.

Now, the mounting of the projection mirror 30 assembled as shown in FIGS. 7A and 7B onto the frame structure body will be sequentially described below.

First of all, the procedure of mounting the projection mirror 30 to the top frame 14 will be described.

First, the two grips 34c of the mirror holding plate 34 are gripped by hands in the condition where the mirror holding plate 34 side of the projection mirror 30 is facing upward and the long holding frame 32 side of the projection mirror 30 is facing forward, as shown in FIG. 7A.

Then, in the condition where the mirror holding plate 34 is gripped, the projection mirror 30 is first lifted and moved toward a skewly upper side as indicated by arrow A in FIG. 18, in such a manner that the shaft pieces 38, 38 and 39 provided under the long holding frame 32 disposed on the front side abuts on the upper surface of the thick wall part 14e on the rear side of the drooping face 14-1 of the top frame 14. Next, the projection mirror 30 is moved further in the direction of arrow A to cause the shaft pieces 38, 38 and 39 to ride over an upper surface portion of the thick wall part 14e. Thereafter, the projection mirror 30 is lowered as indicated by arrow B, thereby fitting the shaft pieces 38, 38 and 39 into the cylindrical-surfaced recessed groove 14a in the top frame 14.

As a result, the projection mirror 30 is in a condition where the reflective surface 31-1 of the plane mirror 31 is facing down, and the holding frame 32 side is turnably engaged with the top frame 14.

Now, the mounting of the projection mirror 30 to the mirror fixing plate 19 and positional adjustment in this situation will be described below referring to FIGS. 6, 16, 19, 22 and 23.

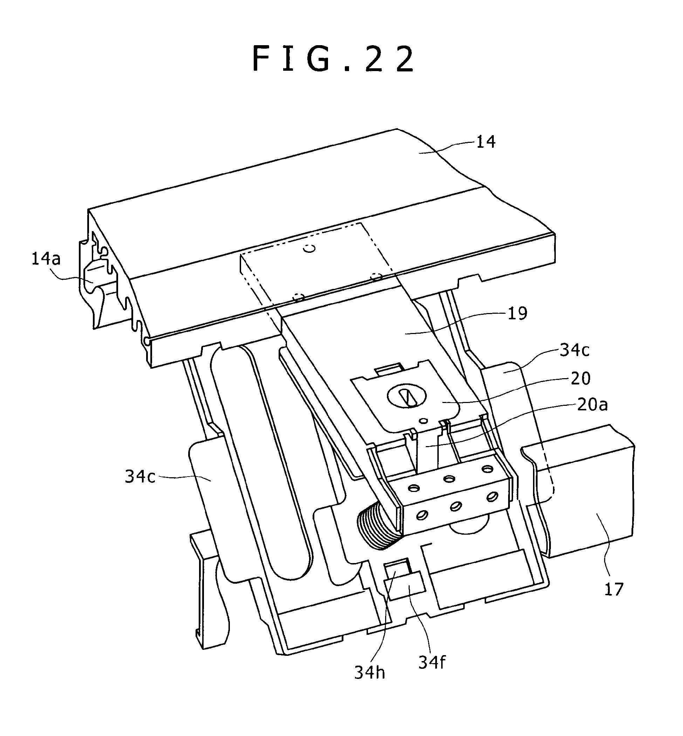

First, as shown in a partly broken perspective view in FIG. 22, the tentative support 20 (see FIG. 16) is mounted on the mirror fixing plate 19. Then, in the condition shown in FIG. 22 where the holding frame 32 side of the projection mirror 30 is turnably mounted in the cylindrical-surfaced recessed groove 14a of the top frame 14, a compression coil spring 40 is mounted in the spring guide 34d of the mirror holding plate 34.

Next, while holding the grips 34c, 34c, the projection mirror 30 is turned so as to insert the engaging pawl 20a of the tentative support 20 into the roughly rectangular opening 34h in the mirror holding plate 34 (see FIG. 19). In this instance, since the engageable part 34f of the mirror holding plate 34 is locked by the engaging pawl 20a of the tentative support 20, the projection mirror 30 is maintained in a predetermined position even when the hands are put off the grips 34c, 34c of the mirror holding plate 34.

Subsequently, the adjusting screw 21 is passed through the round hole 20b in the tentative support 20 and the slot 19f in the mirror fixing plate 19, and is screw-engaged into the screw hole 34e provided in the spring guide 34d of the mirror holding plate 34 (see FIGS. 6, 19 and 22).

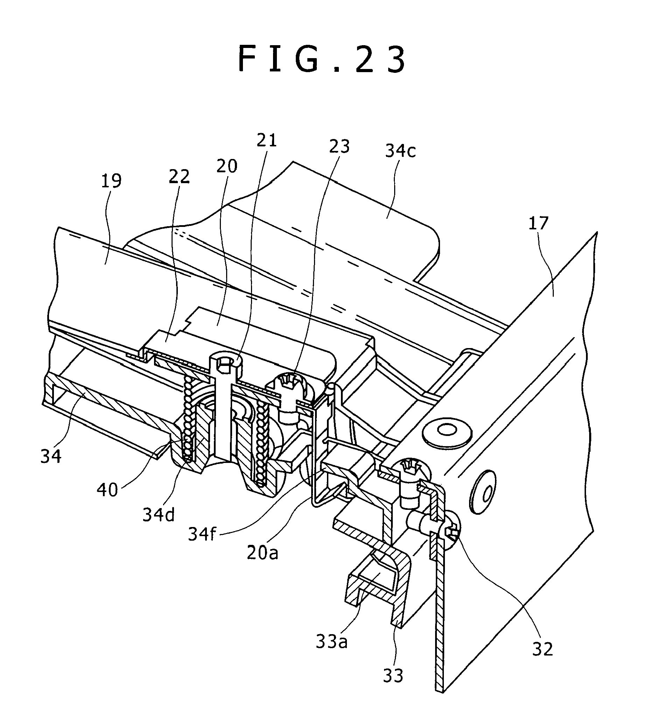

Next, the screwing-in amount of the adjusting screw 21 is adjusted to an initial general position while using, for example, graduations provided on the engaging pawl 20a of the tentative pawl 20a as a yardstick (see FIG. 19 and 23). With this adjustment of the screwing-in amount, the turning amount of the top frame 14 of the projection mirror 30 around the cylindrical-surfaced recessed groove 14a can be finely adjusted.

In this condition, the adjusting screw 21 is in screw engagement with the screw hole 34e in the mirror holding plate 34 by way of the compression coil spring 40; therefore, when the mirror support 17 side of the projection mirror 30 is lifted up, the movement is permitted until the spring guide 34d substantially abuts on the mirror fixing plate 19. Incidentally, the adjustment in this stage may be rough, and a final adjustment is conducted upon assembly of the display unit 2 or in a site of installation of the display by the user.

Subsequently, the fixing plate 22 is mounted to the mirror fixing plate 19, and the fixing screw 23 is passed through the round hole 22b in the fixing plate 22 and the round hole 20c in the tentative support 20 and screw-engaged into the screw hole 19g in the mirror fixing plate 19. This results in the condition shown in FIGS. 19 and 23 where the fixing plate 22 and the mirror fixing plate 19 clamps the flange part 21a (FIG. 16) of the adjusting screw 21 therebetween, to fix the adjusting screw 21 into a non-rotatable state.

Incidentally, FIG. 23 is a sectional perspective view showing the condition where the mounting of the projection mirror 30 is completed, in the same manner as FIG. 19, except that the plane mirror 31 as an essential part equipped with the adjusting screw 21 is omitted.

In this manner, as shown in FIGS. 6 and 19, the mirror holding plate 34 of the projection mirror 30 is positionally adjusted and fixed relative to the mirror fixing plate 19 connecting the top frame 14 and the mirror support 17 to each other, and the inclination angle of the plane mirror 31 of the projection mirror 30 is set to a predetermined value.

The display unit 2 in the rear projection display apparatus configured as above is assembled in the following manner.

In the first place, as shown in FIG. 5, the optical unit 50 is mounted on the frame structure body shown in FIG. 6, using a positioning hole 11-4 provided in the bottom frame 11 as a reference. On the other hand, the projection mirror 30 shown in FIG. 7A, in which the shaft pieces shown in FIG. 7B can be rotatingly slid inside the cylindrical-surfaced recessed groove 14a shown in FIG. 11A of the top frame 14, is provided at a predetermined turning angle by the mirror fixing plate 19. In this case, the projection mirror 30 can be turned through the engagement between the shafts 38a, 38a of the shaft pieces 38, 38 thereof and mirror bearings 2a, 2b shown in FIG. 4 which are mounted at upper portions of the left and right side frames 12, 13.

Then, the screen 3 is mounted on the depth side in FIG. 5 of the screen frame composed of the frames 11, 12, 13 and 14, and peripheral parts of the screen 3 are retained by the four screen retainers 9a, 9b, 9c and 9d shown in FIG. 4.

Incidentally, as shown in FIG. 15, the left and right retainers shown in FIG. 4 for the screen 3 having a multilayer structure are disposed on the side of the faces 12-1 and 13-1 of the left and right side frames 12 and 13 through an elastic damper sheet 3a therebetween, and the screen 3 is fixed so that the screen 3 is not deformed, by the left and right screen retainers 9b and 9c. By the upper and lower screen retainers 9a and 9d, also, the screen 3 is so fixed as not to be deformed (see FIG. 4).

As a result, the display unit 2 is assembled as shown in FIG. 5 when viewed from the rear side, and as shown in FIG. 4 when viewed from the front side. Then, the base part cover 7 is attached to the base part plate 25 fixed to the plate-like part 11f of the bottom frame 11, from the front side of the display unit 2, and the outer frame 4 and the cover frame 6 are disposed in position, as shown in FIG. 3; in this condition, the rear cover 5 is screwed to the outer frame 4 from the rear side, so as to cover the optical unit 50 and the like. In fixing the cover frame 6 to the outer frame 4, in the rear projection display apparatus according to this embodiment, the speaker units 8, 8 shown in FIG. 2 are disposed in position.

In this case, when the mirror adjusting part lid 5a provided at an upper portion of the rear cover 5 shown in FIG. 2 is opened, the mirror fixing plate 19 shown in FIG. 16 is exposed, so that the inclination angle of the projection mirror 30 can be finely adjusted by untightening the fixing screw 23 and rotating the adjusting screw 21.

Thus, in the rear projection display apparatus in this embodiment, in fixing the plane mirror 31, the plane mirror 31 is fitted into the grooves in the holding frames 32 and 33 through the mirror protective sheets 32a and 33a (FIG. 20) therebetween, and the four retainer pieces 37 and the left and right support pieces 35 and 33 made of plastic are arranged at the periphery of the plane mirror 31, whereby the plane mirror 31 can be prevented from being broken due to direct contact with the holding frames 32 and 33 made of a metal (FIG. 7).

In addition, the holding frames 32 and 33 composed of extruded members of an aluminum alloy capable of being produced with high surface accuracy are mounted on the front and rear sides in FIG. 7A of the plane mirror 31, and the holding frames 32 and 33 are fixed by the mirror holding plate 34 formed by die casting and finally finished with a high accuracy, whereby the plane mirror 31 can be held with a high flatness.

Besides, the inclination angle of the plane mirror 31 can be adjusted by a method in which the angle of fixation of the mirror holding plate 34 to the mirror fixing plate 19 is changed by rotating the adjusting screw 21 screw-engaged, from the mirror fixing plate 19 side, into the screw hole 34e provided in the spring guide 34d on the mirror holding plate 34 side.

Further, since the compression coil spring 40 is inserted between the mirror holding plate 34 and the mirror fixing plate 19 and a biasing force is exerted at all times on the adjusting screw 21 to obviate slackening, the position of the plane mirror 31 would not be deviated largely, even at the times of adjustment, transportation and use of the display.

In addition, since the flange part 21a of the adjusting screw 21 is clamped between the fixing plate 22 and the mirror fixing plate 19 and fixed by the fixing screw 23 after the adjustment, the adjusting screw 21 is prevented from being rotated, with the result of generation of an error in the adjusted condition, in practical use of the display.

Besides, since the grips integral with the mirror holding plate 34 are provided, operations conducted by holding the grips by hand can prevent the surface of the plane mirror 31 from being stained at the times of mounting and adjusting the projection mirror 30. In addition, in mounting the projection mirror 30, the mirror holding plate 34 is lifted up in a turning manner by holding the grips 34c, 34c of the mirror holding plate 34, in the condition where the shaft pieces 38, 38, 39 are fitted in the cylindrical-surfaced recessed groove 14a of the top frame 14. Then, the adjusting screw 21 is screw-engaged and fixed into the screw passing hole 34b in the mirror holding plate 34, when the engageable part 34f of the mirror holding plate 34 is locked by the engaging pawl 20a of the tentative support 20, whereby the projection mirror 30 is prevented from dropping, even when the hands are put off the grips 34c, 34c. This structure promises enhanced workability and safety.

Furthermore, the fine adjustment of the inclination angle of the projection mirror 30 can be carried out, as required, even after the rear projection display apparatus is assembled, by opening the mirror adjusting part lid 5a of the rear cover 5 shown in FIG. 1 so as to expose the part of the mirror fixing plate 19.

According to the rear projection display apparatus in this embodiment, the inclination angle of the projection mirror can be finely adjusted by use of the small-pitch adjusting screw, which makes it possible to realize a reduced-thickness system in which an inclination angle with a higher accuracy may be required. In addition, fine adjustment of the inclination angle can be made by use of the adjusting screw for the projection mirror provided at the mirror fixing plate even after the assembled condition of the display, so that it is possible to easily coped with a need for re-adjustment which may be generated due to a shock during transportation, for example.

Besides, since the projection mirror is provided with a simple structure in which the adjusting screw is screw-engaged from the mirror fixing plate side into the screw hole provided at a single position of the mirror holding plate and the inclination angle of the plane mirror is adjusted by only rotating the adjusting screw, an adjusting operation is facilitated, which contributes to suppression of cost.

The rear projection display apparatus according to embodiments of the present invention is not limited to the above-described embodiment, and other various configurations can naturally be adopted within the scope of the invention. For instance, while the reflection-type liquid crystal image display panel has been used as the optical system in the above embodiment, a transmission-type liquid crystal image display panel may also be used. Or, a configuration using an element for controlling a minute mirror such as a DLP (Digital Light Processing) type display panel may also be adopted. In addition, while the side supports as reinforcement for the frames have been provided on the left and right sides in the above embodiment, a configuration may be adopted in which a side support is provided on one of the left and right sides.

It should be understood by those skilled in the art that various modifications, combinations, sub-combinations and alterations may occur depending on design requirements and other factors insofar as they are within the scope of the appended claims or the equivalents thereof.

## Claims

1. A rear projection display apparatus comprising:
a screen;
a projection mirror;
a video apparatus for projecting a picture;
an optical unit including a projection lens;
a light source;
a drive and control circuit; and
a structure body for holding said screen, wherein
said projection mirror is adjustably provided on said structure body fitted with said screen or on a structure body holding said screen.

2. The rear projection display apparatus as set forth in claim 1, wherein
said projection mirror is provided inside said structure body on the ceiling plate side of the rear surface of said screen.

3. The rear projection display apparatus as set forth in claim 2, wherein
said projection mirror includes a plane mirror, two holding frames including extruded members for holding at least two opposite side surface sides of said plane mirror, and a mirror holding plate for connecting said two holding frames to each other;
said two holding frames are each provided with a groove having a width larger than the plate thickness of said projection mirror; and
said two holding frames in the state of clamping said side surface sides of said plane mirror by said grooves are connected to each other by said mirror holding plate.

4. The rear projection display apparatus as set forth in claim 3, wherein
said mirror holding plate has a screw hole and an engageable part;
said structure body provided at an upper portion on the screen rear surface side in said structure body is provided with a mirror fixing plate having a screw passing hole and an engaging pawl; and
an adjusting screw is screw-engaged into said screw hole in said mirror holding plate through said screw passing hole in said mirror fixing plate in the condition where said engageable part and said engaging pawl are in engagement with each other.

5. The rear projection display apparatus as set forth in claim 4, wherein
said projection mirror positionally adjusted by screw engagement of said adjusting screw into said screw hole in said mirror holding plate is fixed by pressing a flange surface provided at a head part of said adjusting screw to the mirror fixing plate side by said mirror fixing plate including a sheet metal.

6. The rear projection display apparatus as set forth in claim 5, wherein
a mirror adjustment lid is provided openably and closably at an upper portion of a rear cover, and positional adjustment of said projection mirror is conducted by use of said adjusting screw in the condition where said mirror adjustment lid is opened.
